# EUROPÄISCHE PATENTANMELDUNG

(11) **EP 2 719 729 A1**
(43) Veröffentlichungstag der Anmeldung: **16.04.2014**
(21) Anmeldenummer: 12187878.9
(22) Anmeldetag: 10.10.2012
(51) Int. Cl.: C08L 77/02, C08L 77/06, C08L 51/06, C08L 23/26

(54) **Formmassen**

(71) Anmelder: LANXESS Deutschland GmbH, 50569 Köln (DE)
(72) Erfinder: Joachimi, Detlev, 47800 Krefeld (DE); Margraf, Günter, 41539 Dormagen (DE)

(57) **Zusammenfassung**

Diese Erfindung betrifft Polyamid-Formmassen mit hoher Schlagzähigkeit und hoher Bruchdehnung. Die Formmassen, enthalten A) 33-85 Gew.-% Copolyamid PA 6/66, polymerisiert aus E -Caprolactam und Hexamethylendiaminadipat, B) 10 bis 50 Gew.-%, bevorzugt 10 bis 45 Gew.-%, besonders bevorzugt 15 bis 40 Gew.-% wenigstens einer Form von Glasfasern, und C) 5 bis 17 Gew.-%, bevorzugt 8 bis 15 Gew.-%, wenigstens eines Schlagzähmodifikators, wobei die Summe aller Gewichtsprozente stets 100 ergibt.

## Beschreibung

Diese Erfindung betrifft Polyamid-Formmassen mit hoher Schlagzähigkeit und hoher Bruchdehnung.

Blends aus Polyamiden und Elastomeren zeigen eine gute Werte in Bezug auf Schlagzähigkeit in spritzfrischem Zustand und bei tiefen Temperaturen. Um verbesserte Werte bezüglich der Schlagzähigkeit zu erzielen, ist die chemische Ankoppelung des Elastomers an die Polyamidmatrix durch funktionelle Gruppen wie Carbonsäuregruppen, Carbonsäureestergruppen oder Anhydridgruppen und die Bildung einer feinteiligen und gleichmäßigen Elastomerverteilung erforderlich. Daher werden Elastomere, insbesondere auf Basis von Polyolefinen sowie Butadien- und Acrylatpfropfkautschuken, mit Carbonsäuregruppen, Carbonsäureestergruppen oder Anhydridgruppen verwendet (Nylon Plastics Handbook, Hanser-Verlag München 1995, Seiten 415-422; Kunststoff-Handbuch 3/4, Polyamide, Carl Hanser Verlag, München 1998, Seiten 16, 133-138).

Die Verwendung von Maleinsäureanhydrid-funktionalisierten Ethylen-Propylen-Copolymeren zur Schlagzähmodifizierung von Polyamiden stellt eine etablierte Methode dar (Nylon Plastics Handbook, Hanser-Verlag München 1995, Seiten 415-419). Maleinsäureanhydrid-funktionalisierte Ethylen-Propylen-Copolymere zur Schlagzähmodifizierung von Polyamid sind kommerziell verfügbar, unter anderem von ExxonMobil Chemical Europe (Exxelor VA1801) und Lanxess Deutschland GmbH (Keltan 2708R).

US-A5705565 beschreibt zur Schlagzähmodifizierung von Polyamiden die Verwendung von Maleinsäureanhydrid gepfropften Ethylen-Propylen-Copolymeren und von weiteren Maleinsäureanhydrid-funktionalisierten Ethylen-α-Olefin-Copolymeren.

Die Aufgabe der vorliegenden Erfindung bestand darin, eine Polyamid-Formmasse mit eine gegenüber dem Stand der Technik höheren Schlagzähigkeit und höheren Bruchdehnung bereitzustellen. Die Schlagzähigkeit im Sinne der vorliegenden Erfindung wird ermittelt gemäß Izod ISO180 1 U an spritzgegossenen Probekörpern 80 mm * 10 mm * 4 mm in spritzfrischem Zustand. Die Bruchdehnung im Sinne der vorliegenden Erfindung wird ermittelt gemäß ISO527 an spritzgegossenen Probekörpern 170 mm * 10 mm * 4 mm in spritzfrischem Zustand.

Eine hohe Schlagzähigkeit im Sinne der vorliegenden Erfindung bedeutet eine gegenüber dem Stand der Technik um mindestens 5% erhöhte Schlagzähigkeit gemäß Izod ISO180 1 U und wird im Rahmen der vorliegenden Erfindung an spritzgegossenen Erzeugnissen in spritzfrischem Zustand bei 23 °C bestimmt.

Eine hohe Bruchdehnung im Sinne der vorliegenden Erfindung bedeutet eine Bruchdehnung gemäß ISO527 von mindestens 3,7%, bevorzugt mindestens 3,9% und wird im Rahmen der vorliegenden Erfindung an spritzgegossenen Erzeugnissen in spritzfrischem Zustand bei 23 °C.

Spritzfrischer Zustand im Sinne der vorliegenden Erfindung bedeutet, dass im unmittelbaren Anschluß an das Spritzgießen die Probekörper für mindestens 16 Stunden und bis zur Durchführung des Zugversuches gemäß ISO527 bzw. der Messung der Schlagzähigkeit gemäß Izod ISO180 1U_bei 23 ± 2 °C und einer relativen Luftfeuchte von 50 ± 10 % gelagert werden. Bezüglich des weiteren Vorgehens sei auf ISO527 verwiesen.

Erfindungsgemäß umfasst der Begriff Formmassen die für den Spritzguss einzusetzenden Granulate. Die zu messenden Eigenschaften lassen sich daher bereits auch bei den Granulaten bestimmen.

Es wurde nun überraschend gefunden, dass Polyamid Formmassen enthaltend
A) 33 bis 85 Gew.-%, bevorzugt 40 bis 82 Gew.-%, Copolyamid PA 6/66, polymerisiert aus ε-Caprolactam und Hexamethylendiaminadipat,
B) 10 bis 50 Gew.-%, bevorzugt 10 bis 45 Gew.-%, besonders bevorzugt 15 bis 40 Gew.-% wenigstens einer Form von Glasfasern, und
C) 5 bis 17 Gew.-%, bevorzugt 8 bis 15 Gew.-% wenigstens eines Schlagzähmodifikators, wobei die Summe aller Gewichtsprozente stets 100 ergibt,
eine hohe Schlagzähigkeit und hohe Bruchdehnung aufweisen.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind.

Gegenstand der vorliegenden Erfindung sind deshalb Formmassen enthaltend
A) 33 bis 85 Gew.-%, bevorzugt 40 bis 82 Gew.-%, Copolyamid PA 6/66, polymerisiert aus ε-Caprolactam und Hexamethylendiaminadipat,
B) 10 bis 50 Gew.-%, bevorzugt 10 bis 45 Gew.-%, besonders bevorzugt 15 bis 40 Gew.-% wenigstens einer Form von Glasfasern, und
C) 5 bis 17 Gew.-%, bevorzugt 8 bis 15 Gew.-%, wenigstens eines Schlagzähmodifikators, wobei die Summe aller Gewichtsprozente stets 100 ergibt.

In einer bevorzugten Ausführungsform der vorliegenden Erfindung enthalten die erfindungsgemäßen Formmassen neben den Komponenten A), B) und C) noch zusätzlich 0,01 bis 5 Gew.-% wenigstens eines sonstigen Additivs D), wobei die Mengen einer oder mehrerer der Komponenten A), B) und C) so reduziert werden, dass die Summe aller Gewichtsprozent stets 100 ergibt.

Bei dem als Komponente A) im erfindungsgemäßen Stoffgemisch einzusetzenden Copolyamid PA 6/66 handelt es sich bevorzugt um statistische, teilkristalline, aliphathische Copolyamide, polymerisiert aus ε-Caprolactam und Hexamethylendiaminadipat.

Erfindungsgemäß besonders bevorzugt sind Formmassen, worin das als Komponente A) einzusetzende Copolyamid 6/66 zu mindestens 85 Gew.%, ganz besonders bevorzugt zu mindestens 90 Gew.% aus ε-Caprolactam besteht bzw. hergestellt wird.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden. Die technisch relevanten Verfahren zur Herstellung von Polyamiden laufen meist über die Polykondensation in der Schmelze. Im Rahmen dieser Erfindung wird auch die hydrolytische Polymerisation von Lactamen als Polykondensation verstanden.

Die Herstellung der Komponenten für das als A) einzusetzende Copolyamid 6/66 erfolgt durch thermische Polykondensation von Monomergemischen aus ε-Caprolactam und Hexamethylendiaminadipat. ε-Caprolactam (CAS-Nummer 105-60-2) wird unter anderem zur Herstellung von Polyamid verwendet. Aus Cyclohexanon wird durch Umsetzung mit dem Hydrogensulfat oder dem Hydrochlorid des Hydroxylamins zunächst Cyclohexanonoxim hergestellt. Dieses wird durch eine Beckmann-Umlagerung in ε-Caprolactam umgewandelt.

Hexamethylendiaminadipat (CAS-Nummer 3323-53-3) ist das Reaktionsprodukt von Adipinsäure und Hexamethylendiamin. Es wird unter anderem auch als Zwischenprodukt bei der Herstellung von Polyamid 66 verwendet. Der für Hexamethylendiamin oft verwendete Trivialname AH-Salz leitet sich von den Anfangsbuchstaben der Ausgangssubstanzen ab.

Die zur Herstellung des Copolyamid 6/66 durchzuführende Polymerisation erfolgt wie bei den Homopolyamiden, wobei die jeweiligen physikalisch-chemischen Eigenschaften, etwa Wasserlöslichkeit der Monomere, Schmelzpunkt und thermische Beständigkeit der Polymere zu beachten sind. Die Herstellung von Polyamiden durch thermische Polykondensation ist dem Fachmann bekannt, siehe auch Nylon Plastics Handbook, Hanser-Verlag München 1995, Seiten 17-27 und Kunststoff-Handbuch 3/4, Polyamide, Carl Hanser Verlag, München 1998, Seiten 22-36.

Selbstverständlich können auch Mischungen von Copolyamid 6/66 mit weiteren Copolyamiden eingesetzt werden, wobei das Mischungsverhältnis beliebig ist.

Das erfindungsgemäß als Komponente A) einzusetzende Copolyamid 6/66 weist bevorzugt eine Viskositätszahl VN gemäß DIN EN ISO 307 in Schwefelsäure von 125 bis 160 ml/g, besonders bevorzugt von 130 bis 155 ml/g, ganz besonders bevorzugt von 140 bis 150 ml/g auf.

Die Viskositätszahl VN ist die unter Normbedingungen ermittelte relative Erhöhung der Viskosität eines Lösungsmittels durch 0,1-1,0 g/100 ml gelöstes Polymer, geteilt durch die Konzentration in g/100ml. In diesem Zusammenhang häufig angewandte Normen sind DIN 53727, ISO 307, ASTM D 2117, wobei im Rahmen der vorliegenden Erfindung die VN nach ISO 307 bestimmt wurde. Die Bestimmung der Viskositätszahl VN erfolgt erfindungsgemäß in handelsüblicher Schwefelsäure 95% bis 98% und durch Einstellung auf 96%. Bei diesem Verfahren wird die Lösungsviskosität des Polyamids als Viskositätszahl in Schwefelsäure im Ubbelohde-Viskosimeter bestimmt.

Die Verwendung von Kettenreglern während der Polymerisation sowie die Festphasennachkondensation als Methoden zur Herstellung von Polyamiden mit einer definierten Viskositätszahl VN bzw. einer definierten relativen Viskosität sind dem Fachmann bekannt (Kunststoff-Handbuch 3/4, Polyamide, Carl Hanser Verlag, München 1998, Seiten 25-36, 65-73).

DE19801267 A1 beschreibt die Einstellung einer definierten Endviskosität mittels Regulierung des Wassergehaltes in der Schmelze durch entsprechende Temperierung des oder der Reaktoren im Bereich 0,1 bis 0,4 Gew.-%. Die Polymerisationstemperaturen werden dabei im Bereich von 230 bis 280 °C gehalten.

DE19801267 A1 offenbart ein Verfahren zur Herstellung von Polyamid-Granulat auf Basis von Polyamid 6 (PA-6) mit einer relativen Lösungsviskosität von 2,2 bis 4,8 (1 g PA-6 in 100 ml 96 % iger Schwefelsäure bei 25 °C gemessen) durch hydrolytische Polymerisation von Caprolactam in Gegenwart von Dicarbonsäuren als Kettenregler, anschließender Verarbeitung der Polymerschmelze zu Granulat, Extraktion der niedermolekularen Anteile aus dem Granulat mit Wasser und anschließender Trocknung des Granulats, indem das bei der Extraktion des Granulats anfallende Extraktwasser enthaltend ein Gemisch aus Caprolactam und dessen Oligomeren mit frischem Lactam versetzt wird und anschließend durch Verdampfen des Wasseranteils konzentriert wird und das so gewonnene Konzentrat in die Polymerisation zurückgeführt wird, wobei die Temperatur beim Eindampfen des Extraktwassers 120 °C nicht überschreitet, und die Konzentration des zyklischen Dimers nach Ende der Polymerisation weniger als 1 Gew.-% beträgt. Zur Umrechnung der relativen Viskosität in Schwefelsäure in die Viskositätszahl VN sei auf DIN EN ISO 307 verwiesen.

Als Komponente B) werden 10 bis 50 Gew.-%, bevorzugt 10 bis 45 Gew.-%, besonders bevorzugt 15 bis 40 Gew.-% wenigstens einer Form von Glasfasern eingesetzt. Die Form der erfindungsgemäß einzusetzenden Glasfaser wird ganz besonders bevorzugt ausgewählt aus der Gruppe der E-Glasfasern, A-Glasfasern, C-Glasfasern, D-Glasfasern, S-Glasfasern und / oder R-Glasfasern. Erfindungsgemäß sind E-Glasfasern insbesondere bevorzugt.

Die erfindungsgemäß als Komponente B) einzusetzenden Glasfasern weisen bevorzugt eine Querschnittsfläche und einen Filament-Durchmesser von 6 - 11 µm, besonders bevorzugt einen Filament-Durchmesser von 9 - 11 µm, auf. Die erfindungsgemäß einzusetzenden Glasfasern weisen bevorzugt eine kreisförmige oder ovale Querschnittsfläche auf, besonders bevorzugt eine kreisförmige Querschnittsfläche.

Die als Komponente B) einzusetzenden Glasfasern können in einer alternativen Ausführungsform von flacher Gestalt und nicht-kreisförmiger Querschnittsfläche sein, deren Hauptquerschnittsachse eine Breite im Bereich von 6 - 40 µm und deren Nebenquerschnittsachse eine Breite im Bereich von 3 - 20 µm aufweist.

In einer weiteren bevorzugten Ausführungsform können sowohl kreisförmige oder ovale als auch nicht kreisförmige Glasfasern als Komponente B) nebeneinander eingesetzt werden.

Die als Komponente B) einzusetzenden Glasfasern können als Endlosfasern oder als geschnittene oder gemahlene Glasfasern der erfindungsgemäßen Formmasse zugesetzt werden. Bevorzugt sind die Glasfasern mit einem geeigneten Schlichtesystem ausgerüstet. Für Glasfasern geeignete Schlichtesysteme enthalten bevorzugt folgende Komponenten:
● Haftvermittler, besonders bevorzugt auf Silanbasis
● Filmbildner
● Vernetzer
● Gleitmittel

Bevorzugt werden diese Schlichtesysteme in Form wässriger Polymer-Dispersionen auf die Glasfaser aufgetragen.

Besonders bevorzugt werden diese Schlichtesysteme als Haftvermittler für die Komponente B) in Bezug auf die Komponente A) eingesetzt. Ganz besonders bevorzugt wird ein Schlichtesystem auf Silanbasis eingesetzt.

Ganz besonders bevorzugt sind Haftvermittler auf Silanbasis der allgemeinen Formel (I)

(X-(CH₂)_{q})ₖSi-(O-CᵣH2ᵣ₊₁)₄₋ₖ (I)

worin
- X: für NH₂-, HO- oder 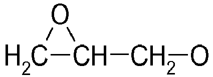 steht,
- q: für eine ganze Zahl von 2 bis 10, bevorzugt 3 bis 4 steht,
- r: für eine ganze Zahl von 1 bis 5, bevorzugt 1 bis 2 steht und
- k: für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Gesamtmenge der Schlichte-Trockenmasse, die als Haftvermittler auf die Glasfaser aufgetragen wird, beträgt bevorzugt 0,05 bis 2 Gew.-%, besonders bevorzugt 0,25 bis 1,5 Gew.-% und ganz besonders bevorzugt 0,5 bis 1 Gew.-% bezogen auf die Glasfaser.

Als Komponente C) werden 5 bis 17 Gew.-%, bevorzugt 8 bis 15 Gew.-%, wenigstens eines Schlagzähmodifikators eingesetzt. Eine Übersicht geeigneter Schlagzähmodifikatoren erfolgt in Nylon Plastics Handbook, Hanser-Verlag München 1995, Seiten 415-422.

Bevorzugt einzusetzende Schlagzähmodifikatoren C) im Sinne der vorliegenden Erfindung sind Copolymere von Ethylen und α-Olefinen, besonders bevorzugt Ethylen und 1-Octen, von Ethylen und Propylen (EPM), Ethylen und Propylen und Dien, insbesondere Ethylnorbornen (EPDM), Ethylen und Butylen, die durch Reaktion mit Maleinsäureanhydrid oder Pfropfcopolymerisaten mit einem ungesättigten Dicarbonsäureanhydrid oder Dicarbonsäuren und/oder Ester, insbesondere Maleinsäureanhydrid, Itaconsäure, Itaconsäureanhydrid, Fumarsäure oder Maleinsäure oder einem Glycidylacrylat insbesondere Glycidylmethacrylat funktionalisiert worden sind. Die Herstellung solcher Schlagzähmodifikatoren wird beispielsweise in US-A 4174358 beschrieben.

Weitere bevorzugt einzusetzende Schlagzähmodifikatoren C) im Sinne der vorliegenden Erfindung sind Kern-Schale-Modifikatoren, wie sie in Nylon Plastics Handbook, Hanser-Verlag München 1995, Seiten 421-422 beschrieben wurden.

Insbesondere bevorzugt sind mit Maleinsäureanhydrid funktionalisierte Copolymere von Ethylen und Propylen (EPM), Ethylen und Propylen und Dien, insbesondere Ethylnorbornen (EPDM), Ethylen und Butylen, Ethylen und 1-Octen. Der Maleinsäureanhydrid-Gehalt der funktionalisierten Copolymere beträgt bevorzugt 0,1 bis 10 Gew.-%, besonders bevorzugt 0,1 bis 5 Gew.-%, ganz besonders bevorzugt 0,1 bis 2 Gew.-%.

Die Dichte des als Komponente C) einzusetzenden funktionalisierten Copolymers beträgt bevorzugt 0,80-0,95 g/cm³, besonders bevorzugt 0,85-0,90 g/cm³. Die Dichte eines Stoffes ist der Quotient aus der Masse und dem Volumen, die Bestimmung der Dichte erfolgt nach DIN 53 479.

Der Volumen-Fließindex MVI des als Komponente C) einzusetzenden funktionalisierten Copolymers bei 190 °C / 2,16 kg / 5 min beträgt bevorzugt 1-50 cm³/10min, besonders bevorzugt 2-20 cm³/10min. Bezüglich des MVI, seiner Definition und seiner Bestimmung sei auf B. Carlowitz, Tabellarische Übersicht über die Prüfung von Kunststoffen, 6. Auflage, Giesel Verlag für Publizität, 1992 verwiesen. Demnach ist der MVI das Volumen einer Probe, das in einer bestimmten Zeit unter festgelegten Bedingungen durch eine Düse gedrückt wird. Dies erfolgt für Thermoplasten nach DIN 53 735 (1988) bzw. ISO 1133-1981. Der MVI dient zur Charakterisierung des Fließverhaltens (Formmassenprüfung) eines Thermoplasten bei bestimmten Druck- und Temperaturbedingungen. Er ist ein Maß für die Viskosität einer Kunststoffschmelze.

Der MVI nach ISO 1133 wird mittels eines Kapillarrheometers ermittelt, wobei das Material (Granulat oder Pulver) in einem beheizbaren Zylinder aufgeschmolzen und unter einem durch die Auflagelast entstehenden Druck durch eine definierte Düse (Kapillare) gedrückt wird. Ermittelt wird das austretende Volumen der Polymerschmelze (des sogenannten Extrudats) als Funktion der Zeit. Die Einheit für den MFI ist cm³/10min.

Neben dem Volumen-Fließindex MVI beschreibt ISO 1133-1981 auch den Schmelzindex MFI. Bezüglich des MFI, seiner Definition und seiner Bestimmung sei auf B. Carlowitz, Tabellarische Übersicht über die Prüfung von Kunststoffen, 6. Auflage, Giesel Verlag für Publizität, 1992 verwiesen. Demnach ist der MFI das Masse einer Probe, das in einer bestimmten Zeit unter festgelegten Bedingungen durch eine Düse gedrückt wird. Die Einheit für den MFI ist g/10min.

In einer alternativen Ausführungsform wird das als Komponente C) einzusetzende funktionalisierte Copolymer auch in Mischungen mit einem nicht funktionalisierten Copolymer eingesetzt. Das Gewichtsverhältnis von funktionalisiertem und nicht-funktionalisiertem Copolymer variiert dabei innerhalb eines breiten Bereiches bevorzugt zwischen 1 : 10 und 10 : 1; besonders bevorzugt ist das Verhältnis geringer als 1, ganz besonders bevorzugt zwischen 0,9 und 0,1.

In einer bevorzugten Ausführungsform der vorliegenden Erfindung enthalten die erfindungsgemäßen Formmassen neben den Komponenten A), B) und C) noch zusätzlich 0,01 bis 5 Gew.-% wenigstens eines sonstigen Additivs D). Die Additive D) können alleine oder in Mischung bzw. in Form von Masterbatchen eingesetzt werden.

Additive D) im Sinne der vorliegenden Erfindung sind Thermo- und UV-Stabilisatoren (Plastics Additives Handbook, 5th Edition, Hanser-Verlag, München, 2001, Seiten 80-84, 353-363; Kunststoff-Handbuch 3/4, Polyamide, Carl Hanser Verlag, München 1998, Seite 75-84), Nukleierungsmittel (Plastics Additives Handbook, 5th Edition, Hanser-Verlag, München, 2001, Seiten 949-959, 966; Plastics Additives Handbook, 5th Edition, Hanser-Verlag, München, 2001, Seiten 85-88), Gleit- und Entformungsmittel (Plastics Additives Handbook, 5th Edition, Hanser-Verlag, München, 2001, Seiten 511-542, 546-548) sowie Farbstoffe und Pigmente (Plastics Additives Handbook, 5th Edition, Hanser-Verlag, München, 2001, Seiten 813-818, 823, 872-874).

Bevorzugte Stabilisatoren sind Thermostabilisatoren (Plastics Additives Handbook, 5th Edition, Hanser-Verlag, München, 2001, Seiten 80-84) und UV-Stabilisatoren (Plastics Additives Handbook, 5th Edition, Hanser-Verlag, München, 2001, Seiten 353-363).

Als Additiv D) einzusetzende Stabilisatoren werden bevorzugt Kupfer(I)halogenide, bevorzugt Chloride, Bromide, Jodide in Verbindung mit Halogeniden von Alkalimetallen, besonders bevorzugt Natrium-, Kalium und/oder Lithium-halogenide eingesetzt (Kunststoff-Handbuch 3/4, Polyamide, Carl Hanser Verlag, München 1998, Seite 78). Insbesondere bevorzugt werden Natrium- oder Kaliumbromid eingesetzt.

Weiterhin werden bevorzugt sterisch gehinderte Phenole (Kunststoff-Handbuch 3/4, Polyamide, Carl Hanser Verlag, München 1998, Seite 79), Hydrochinone, Phosphite (Kunststoff-Handbuch 3/4, Polyamide, Carl Hanser Verlag, München 1998, Seiten 79, 82), aromatische sekundäre Amine wie Diphenylamine (Kunststoff-Handbuch 3/4, Polyamide, Carl Hanser Verlag, München 1998, Seite 79), substituierte Resorcine, Salicylate, Benzotriazole oder Benzophenone, sowie verschieden substituierte Vertreter dieser Gruppen oder deren Mischungen als Stabilisatoren eingesetzt.

In einer bevorzugten Ausführungsform werden aber auch Gemische der hier genannten Stabilisatoren eingesetzt.

Als Additiv D) einzusetzende Nukleierungsmittel werden bevorzugt Natrium- oder Calciumphenylphosphinat, Aluminiumoxid, Siliziumdioxid sowie besonders bevorzugt Talkum eingesetzt.
Als Additiv D) einzusetzende Gleit- und Entformungsmittel werden bevorzugt Esterwachse, Pentaerytritoltetrastearat (PETS), langkettige Fettsäuren, besonders bevorzugt Stearinsäure oder Behensäure und Ester, deren Salze, insbesondere bevorzugt Ca- oder Zn-Stearat, sowie Amidderivate, bevorzugt Ethylen-bis-stearylamid oder Montanwachse, bevorzugt Mischungen aus geradkettigen, gesättigten Carbonsäuren mit Kettenlängen von 28 bis 32 C-Atomen sowie niedermolekulare Polyethylen- bzw. Polypropylenwachse eingesetzt.

Als Additiv D) bevorzugte Farbstoffe und Pigmente D) sind Ruß (Plastics Additives Handbook, 5th Edition, Hanser-Verlag, München, 2001, Seiten 823, 924-925; Elektrisch leitende Kunststoffe, Carl Hanser Verlag, München 1989, 2. Auflage, Seite 21-23) und Nigrosin-Farbstoffe. Nigrosin-Farbstoffe sind Phenazin-Farbstoffe mit polyzyklischer, aromatischer Struktur, die durch Reaktion von Nitrobenzol und Anilin hergestellt werden. Bevorzugte Nigrosin-Farbstoffe sind Solvent Black 7 (CAS 8005-02-5), Solvent Black 5 (CAS No.11099-03-9) und Acid Black (CAS 8005-03-6).

Erfindungsgemäß ganz besonders bevorzugt sind Formmassen enthaltend
A) 33 bis 85 Gew.-%, bevorzugt bevorzugt 40 bis 82 Gew.-%, Copolyamid PA 6/66, polymerisiert aus ε-Caprolactam und Hexamethylendiaminadipat,
B) 10 bis 50 Gew.-%, bevorzugt 10 bis 45 Gew.-%, besonders bevorzugt 15 bis 40 Gew.-% wenigstens einer Form von Glasfasern, und
C) 5 bis 17 Gew.-%, bevorzugt 8 bis 15 Gew.-% Ethylen-Propylen-Copolymer enthaltend 0,7 Gew.-% gepfropftes Maleinsäureanhydrid wobei die Summe aller Gewichtsprozente stets 100 ergibt.

Insbesondere bevorzugt wird als Komponente C) ein Ethylen-Propylen-Copolymer enthaltend 0,7 Gew.-% gepfropftes Maleinsäureanhydrid mit MVI 5 cm³/10 min (190 °C /2,16 kg / 5 min) eingesetzt.

Die erfindungsgemäßen Formmassen werden durch bekannte Verfahren zu den gewünschten Erzeugnissen, bevorzugt Bauteilen, Formkörpern, Formteilen oder Halbzeugen, verarbeitet, bevorzugt durch Spritzgießen.

Spritzgießverfahren thermoplastischer Polymere zur Herstellung von Erzeugnissen, bevorzugt Bauteilen, Formteilen, Formkörpern oder Halbzeugen, arbeiten üblicherweise bei Schmelzetemperaturen im Bereich von 220 bis 330°C, bevorzugt von 230 bis 300°C sowie gegebenenfalls zusätzlich bei Drücken von maximal 2500 bar.

Das Verfahren des Spritzgießens wird üblicherweise durchgeführt, indem der Rohstoff, also die einzusetzende erfindungsgemäße Formmasse, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet im Spritzgießprozess die Teilschritte:
1. Plastifizieren / Aufschmelzen
2. Einspritzphase (Füllvorgang)
3. Nachdruckphase (wegen thermischer Kontraktion bei der Kristallisation)
4. Entformen.

Eine zu diesem Zweck einzusetzende Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Bauteil bzw. das Erzeugnis oder der Formkörper gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung.

Zum Spritzgießen von Polyamiden siehe auch Kunststoff-Handbuch 3/4, Polyamide, Carl Hanser Verlag, München 1998, Seiten 315-352.

Die vorliegende Erfindung betrifft deshalb auch ein Verfahren zur Herstellung von Erzeugnissen mit hoher Schlagzähigkeit und hoher Bruchspannung, dadurch gekennzeichnet, dass man Formmassen enthaltend
A) 33-85 Gew.-% Copolyamid PA 6/66, polymerisiert aus ε-Caprolactam und Hexamethylendiaminadipat,
B) 10 bis 50 Gew.-%, bevorzugt 10 bis 45 Gew.-%, besonders bevorzugt 15 bis 40 Gew.-% wenigstens einer Form von Glasfasern, und
C) 5 bis 17 Gew.-%, bevorzugt 8 bis 15 Gew.-%, wenigstens eines Schlagzähmodifikators, wobei die Summe aller Gewichtsprozente stets 100 ergibt im Spritzgießprozess einsetzt im Spritzguss verarbeitet.

Die erfindungsgemäß herzustellenden Erzeugnisse, bevorzugt Formkörper, Formteile, Bauteile oder Halbzeuge werden bevorzugt in der Fahrzeugindustrie eingesetzt. Besonders bevorzugt handelt es sich bei den erfindungsgemäßen Erzeugnissen um Airbaggehäuse für die Fahrzeugindustrie, insbesondere für die Kraftfahrzeugindustrie.

Die vorliegende Erfindung betrifft deshalb auch die Verwendung von Formmassen enthaltend
A) 33-85 Gew.-% Copolyamid PA 6/66, polymerisiert aus ε-Caprolactam und Hexamethylendiaminadipat,
B) 10 bis 50 Gew.-%, bevorzugt 10 bis 45 Gew.-%, besonders bevorzugt 15 bis 40 Gew.-% wenigstens einer Form von Glasfasern, und
C) 5 bis 17 Gew.-%, bevorzugt 8 bis 15 Gew.-%, wenigstens eines Schlagzähmodifikators, wobei die Summe aller Gewichtsprozente stets 100 ergibt, zur Herstellung von Erzeugnissen mit hoher Schlagzähigkeit und hoher Bruchspannung im Spritzgussverfahren.

### Beispiele

Zum Nachweis der erfindungemäß beschriebenen Verbesserungen wurden zunächst durch Compoundierung entsprechende Kunststoff-Formmassen angefertigt. Die einzelnen Komponenten wurden in einem Zweiwellenextruder (ZSK 26 Mega Compounder der Fa. Coperion Werner & Pfleiderer, Stuttgart, Deutschland) bei Temperaturen zwischen 260 und 300°C gemischt, als Strang in ein Wasserbad ausgetragen, bis zur Granulierfähigkeit abgekühlt und granuliert.

Der Spritzguss von Prüfkörpern 80 mm * 10 mm * 4 mm und 170 mm * 10 mm * 4 mm der erfindungsgemäßen Formasse der Beispiele 1 und 2 sowie der Formmassen der Vergleichsbeispiele 1, 2, 3 und 4 erfolgte auf einer Spritzgießmaschine des Typs ARBURG-520 C 200 - 350 bei einer Massetemperatur von 290 °C und einer Werkzeugtemperatur von 80 °C.

Vergleichsbeispiel 1 wurde gewählt in Anlehnung an US-A5705565.

Die Ermittlung der Schlagzähigkeit gemäß Izod ISO180 1 U erfolgte an spritzgegossenen Probekörpern 80 mm * 10 mm * 4 mm im spritzfrischen Zustand.

Die Ermittlung der Bruchdehnung gemäß ISO527 erfolgte an spritzgegossenen Probekörpern 170 mm * 10 mm * 4 mm in spritzfrischem Zustand.

**Tabelle 1: Ausführungsbeispiele In der folgenden Tabelle sind die Mengen der Einsatzstoffe in Gew.-% und die erfindungsgemäßen Effekte angegeben.**

| | | **Beispiel 1** | **Vergleich 1** | **Vergleich 2** | **Vergleich 3** | **Vergleich 4** |
|---|---|---|---|---|---|---|
| Copolyamid ¹⁾ | [%] | 49,735 | 0 | 0 | 0 | 0 |
| Polyamid ²⁾ | | 0 | 49,735 | 10 | 0 | 0 |
| Polyamid ³⁾ | [%] | 0 | 0 | 39,735 | 49,735 | 59,735 |
| Glasfaser ⁴⁾ | [%] | 40 | 40 | 40 | 40 | 40 |
| Schlagzähmodifikator ⁴⁾ | [%] | 10 | 10 | 10 | 10 | 0 |
| Additive ⁶⁾ | [%] | 0,265 | 0,265 | 0,265 | 0,265 | 0,265 |
| Schlagzähigkeit Izod ISO180 1U bei 23 °C ⁷⁾ | [kJ/m ²] | 79 | 70 | 73 | 72 | 67 |
| Bruchdehnung bei 23 °C ⁸⁾ | [%] | 4,3 | 3,4 | 3,5 | 3,3 | 3,2 |

| | | | | | | |
|---|---|---|---|---|---|---|
| 1) Copolyamid PA 6/66 (polymerisiert aus 95 Gew.-% ε-Caprolactam und 5 Gew.-% Hexamethylendiaminadipat) mit einer Viskositätszahl VN gemäß DIN EN ISO 307 in Schwefelsäure von 146 ml/g. 2) Lineares Polyamid 66 mit einer Viskositätszahl VN gemäß DIN EN ISO 307 in Schwefelsäure von 143 ml/g. 3) Lineares Polyamid 6 mit einer Viskositätszahl VN gemäß DIN EN ISO 307 in Schwefelsäure von 146 ml/g. 4) Mit silanhaltigen Verbindungen beschichtete E-Glasfaser mit einem Filament-Durchmesser von 11 µm 5) Ethylen-Propylen-Copolymer enthaltend 0,7 Gew.-% gepfropftes Maleinsäureanhydrid (MVI: 5 cm³/10 min (190 °C / 2,16 kg / 5 min; Dichte 0,87 g/cm³). 6) Talkum, Cul/KBr-Gemisch (Molverhältnis 1 : 4,5), Montanwachs 7) gemessen an Probekörpern 80 mm * 10 mm * 4 mm in spritzfrischem Zustand bei 23 °C 8) gemessen an Probekörpern 170 mm * 10 mm * 4 mm in spritzfrischem Zustand bei 23 °C | | | | | | |

Die Formasse des erfindungsgemäßen Beispiels 1 zeigte eine höhere Schlagzähigkeit gemäß Izod ISO180 1 U an Probekörpern 80 mm * 10 mm * 4 mm in spritzfrischem Zustand bei 23 °C und eine höhere Bruchdehnung gemäß ISO527 an Probekörpern 170 mm * 10 mm * 4 mm in spritzfrischem Zustand bei 23 °C als das in Anlehnung an US-A5705565 gewählte Vergleichsbeispiel 1, als auch gegenüber den Vergleichsbeispielen 2 bis 4.

**Tabelle 2: Ausführungsbeispiele In der folgenden Tabelle sind die Mengen der Einsatzstoffe in Gew.-% und die erfindungsgemäßen Effekte angegeben.**

| | | **Beispiel 2** | **Vergleich 3** | **Vergleich 4** |
|---|---|---|---|---|
| Copolyamid ¹⁾ | [%] | 59,384 | 0 | 0 |
| Polyamid ²⁾ | [%] | 0 | 59,384 | 69,384 |
| Glasfaser ³⁾ | [%] | 30 | 30 | 30 |
| Schlagzähmodifikator ⁴⁾ | [%] | 10 | 10 | 0 |
| Additive ⁵⁾ | [%] | 0,616 | 0,616 | 0,616 |
| Bruchdehnung bei 23 °C | [%] | 3,9 | 3,5 | 3,0 |

| | | | | |
|---|---|---|---|---|
| 1) Copolyamid PA 6/66 (polymerisiert aus 95 Gew.-% ε-Caprolactam und 5 Gew.-% Hexamethylendiaminadipat) mit einer Viskositätszahl VN gemäß DIN EN ISO 307 in Schwefelsäure von 146 ml/g. 2) Lineares Polyamid 6 mit einer Viskositätszahl VN gemäß DIN EN ISO 307 in Schwefelsäure von 146 ml/g. 3) Mit silanhaltigen Verbindungen beschichtete E-Glasfaser mit einem Filament-Durchmesser von 11 µm. 4) Ethylen-Propylen-Copolymer enthaltend 0,7 Gew.-% gepfropftes Maleinsäureanhydrid (MVI: 5 cm³/10 min (190 °C / 2,16 kg / 5 min; Dichte 0,87 g/cm³). 5) Talkum, Cul/KBr-Gemisch (Molverhältnis 1 : 4,5), Montanwachs, Ruß 6) gemessen an Probekörpern 170 mm * 10 mm * 4 mm in spritzfrischem Zustand bei 23 °C | | | | |

Die Formasse des erfindungsgemäßen Beispiels 2 zeigte eine höhere Bruchdehnung gemäß ISO527 an Probekörpern 170 mm * 10 mm * 4 mm in spritzfrischem Zustand bei 23 °C als Vergleichsbeispiele 3 und 4.

## Patentansprüche

1. Formmassen, enthaltend
A) 33-85 Gew.-% Copolyamid PA 6/66, polymerisiert aus ε-Caprolactam und Hexamethylendiaminadipat,
B) 10 bis 50 Gew.-%, bevorzugt 10 bis 45 Gew.-%, besonders bevorzugt 15 bis 40 Gew.-% wenigstens einer Form von Glasfasern, und
C) 5 bis 17 Gew.-%, bevorzugt 8 bis 15 Gew.-%, wenigstens eines Schlagzähmodifikators, wobei die Summe aller Gewichtsprozente stets 100 ergibt.

2. Formmassen gemäß Anspruch 1 **dadurch gekennzeichnet, dass** diese neben den Komponenten A), B) und C) noch zusätzlich
D) 0,01-5 Gew.-% wenigstens eines sonstigen Additivs enthalten, wobei die Mengen von einer oder mehrerer der Komponenten A), B) und C) so reduziert werden, dass die Summe aller Gewichtsprozente stets 100 ergibt.

3. Formmassen gemäß der Ansprüche 1 oder 2, **dadurch gekennzeichnet, dass** die Glasfaser mit einem geeigneten Schlichtesystem als Haftvermittler, bevorzugt mit einem Schlichtesystem auf Silanbasis ausgerüstet ist.

4. Formmassen gemäß Anspruch 3, **dadurch gekennzeichnet, dass** als Schlichtesystem auf Silanbasis Verbindungen der allgemeinen Formel (I)
(X-(CH₂)_{q})ₖSi-(O-CᵣH2ᵣ₊₁)₄₋ₖ (I)
worin
X für NH₂-, HO- oder 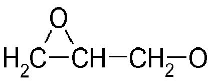 steht,
q für eine ganze Zahl von 2 bis 10, bevorzugt 3 bis 4 steht,
r für eine ganze Zahl von 1 bis 5, bevorzugt 1 bis 2 steht und
k für eine ganze Zahl von 1 bis 3, bevorzugt 1 steht, eingesetzt werden.

5. Formmassen gemäß der Ansprüche 3 oder 4, **dadurch gekennzeichnet, dass** ein Schlichtesystem als Haftvermittler aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten, eingesetzt werden.

6. Formmassen gemäß einem der Ansprüche 1 bis 5, **dadurch gekennzeichnet, dass** es sich bei dem als Komponente A) einzusetzenden Copolyamid PA 6/66 um statistische, teilkristalline, aliphathische Copolyamide, polymerisiert aus ε-Caprolactam und Hexamethylendiaminadipat, handelt.

7. Formmassen gemäß der Ansprüche 1 bis 6, **dadurch gekennzeichnet, dass** das als Komponente A) einzusetzende Copolyamid 6/66 zu mindestens 85 Gew.%, bevorzugt zu mindestens 90 Gew.% aus ε-Caprolactam besteht bzw. hergestellt wird.

8. Formmassen gemäß einem der Ansprüche 1 bis 7, **dadurch gekennzeichnet, dass** als Komponente C) Copolymere von Ethylen und α-Olefinen, bevorzugt von Ethylen und 1-Octen, von Ethylen und Propylen (EPM), von Ethylen und Propylen und Dien, von Ethylen und Butylen eingesetzt werden, die durch Reaktion mit Maleinsäureanhydrid oder Pfropfcopolymerisaten mit einem ungesättigten Dicarbonsäureanhydrid oder Dicarbonsäuren und/oder Ester, insbesondere Maleinsäureanhydrid, Itaconsäure, Itaconsäureanhydrid, Fumarsäure oder Maleinsäure oder einem Glycidylacrylat insbesondere Glycidylmethacrylat funktionalisiert worden sind.

9. Formmassen gemäß Anspruch 8, **dadurch gekennzeichnet, dass** als Komponente C) mit Maleinsäureanhydrid funktionalisierte Copolymere von Ethylen und Propylen (EPM), von Ethylen und Propylen und Dien, insbesondere Ethylnorbornen (EPDM), von Ethylen und Butylen oder von Ethylen und 1-Octen eingesetzt werden.

10. Formmassen gemäß der Ansprüche 8 oder 9, **dadurch gekennzeichnet, dass** der Maleinsäureanhydrid-Gehalt der funktionalisierten Copolymere 0,1 bis 10 Gew.-% beträgt.

11. Formmassen gemäß der Ansprüche 8 bis 10, **dadurch gekennzeichnet, dass** die Dichte des als Komponente C) einzusetzenden funktionalisierten Copolymers 0,80-0,95 g/cm³, bevorzugt 0,85-0,90 g/cm³, beträgt.

12. Verfahren zur Herstellung von Erzeugnissen mit hoher Schlagzähigkeit und hoher Bruchspannung, **dadurch gekennzeichnet, dass** man Formmassen enthaltend
A) 33-85 Gew.-% Copolyamid PA 6/66, polymerisiert aus ε-Caprolactam und Hexamethylendiaminadipat,
B) 10 bis 50 Gew.-%, bevorzugt 10 bis 45 Gew.-%, besonders bevorzugt 15 bis 40 Gew.-% wenigstens einer Form von Glasfasern, und
C) 5 bis 17 Gew.-%, bevorzugt 8 bis 15 Gew.-%, wenigstens eines Schlagzähmodifikators, wobei die Summe aller Gewichtsprozente stets 100 ergibt
im Spritzgießprozess einsetzt im Spritzguss verarbeitet.

13. Verwendung von Formmassen enthaltend
A) 33-85 Gew.-% Copolyamid PA 6/66, polymerisiert aus ε-Caprolactam und Hexamethylendiaminadipat,
B) 10 bis 50 Gew.-%, bevorzugt 10 bis 45 Gew.-%, besonders bevorzugt 15 bis 40 Gew.-% wenigstens einer Form von Glasfasern, und
C) 5 bis 17 Gew.-%, bevorzugt 8 bis 15 Gew.-%, wenigstens eines Schlagzähmodifikators, wobei die Summe aller Gewichtsprozente stets 100 ergibt, zur Herstellung von Erzeugnissen mit hoher Schlagzähigkeit und hoher Bruchspannung im Spritzgussverfahren.

14. Verwendung gemäß Anspruch 13, **dadurch gekennzeichnet, dass** es sich bei den Erzeugnissen um Formkörper, Formteile, Bauteile oder Halbzeuge handelt, die in der Fahrzeugindustrie eingesetzt werden, bevorzugt als Airbaggehäuse für die Fahrzeugindustrie, insbesondere für die Kraftfahrzeugindustrie.

15. Erzeugnisse, bevorzugt Formkörper, Formteile, Bauteile oder Halbzeuge für die Fahrzeugindustrie, erhältlich durch Spritzguss der Formmassen gemäß der Ansprüche 1 bis 11.
